# EUROPEAN PATENT SPECIFICATION

(11) **EP 1 396 792 B1**
(45) Date of publication and mention of the grant of the patent: **15.06.2005**
(21) Application number: 02256209.4
(22) Date of filing: 06.09.2002
(51) Int. Cl.: G06F 13/16

(54) **Memory copy command specifying source and destination of data executed in the memory controller**
Speicherkopierbefehl mit Angabe von Quelle und Ziel, der in der Speichersteuerung ausgeführt wird
Commande de copie du mémoire avec indication de source et destination exécutée dans le controleur de mémoire

(43) Date of publication of application: 10.03.2004
(73) Proprietor: Sun Microsystems, Inc., Santa Clara, California 95054 (US)
(72) Inventor: Durrant, Paul, Slough, SL2 3DX (GB)
(74) Representative: Davies, Simon Robert

(56) References cited:
- US-A- 6 003 112
- US-A- 6 076 152

## Description

### Field of the Invention

The present invention relates to computer systems and the like, and in particular to the copying of data within the memory of such systems.

### Background of the Invention

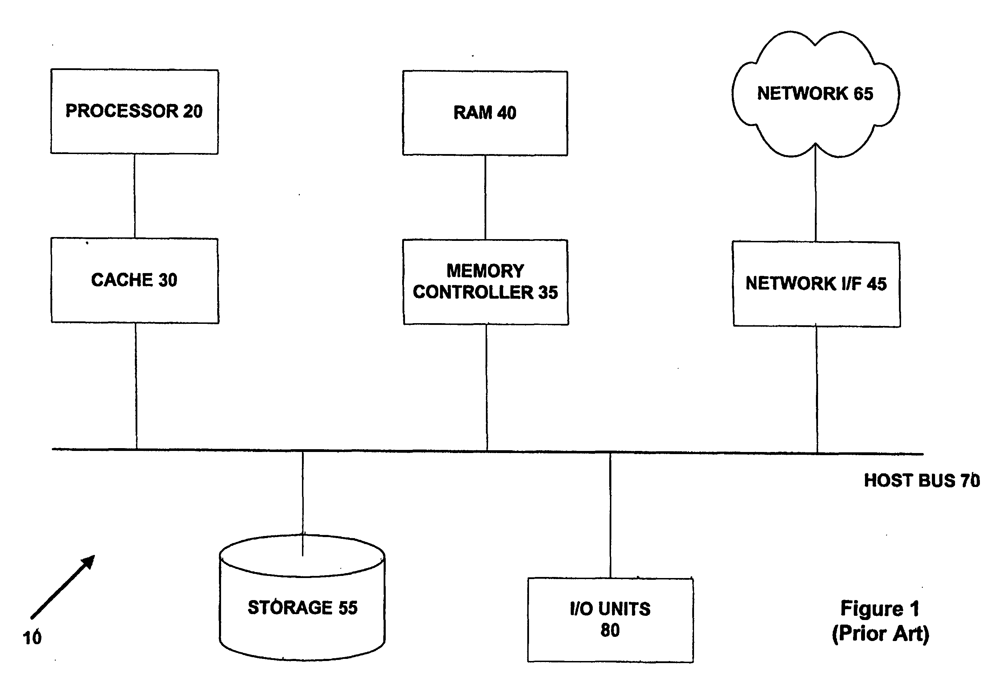

Figure 1 is a schematic diagram depicting a typical known computer system 10. The various components of the computer system 10 are interconnected by a bus 70, which may in practice be implemented by a hierarchy of different speed buses, to provide communications between the components. Note that a switching fabric can sometimes be provided instead of the bus (this is particularly the case in higher-end systems, such as a large-scale server).

At the heart of computer system 10 is a processor 20, also known as a central processing unit (CPU), which is responsible for executing program instructions and directing the overall operations of system 10. Many modem systems support multiprocessing, either by having more than one processor units, or (and) by forming separate processing cores within a single semiconductor device.

Random access memory (RAM) 40 is provided for volatile storage of instructions and data for utilisation by the processor 20. The operation of RAM 40 and interaction with host bus 70 is controlled by a memory controller 35, which is located directly between RAM 40 and bus 70. The connection between the memory controller 35 and RAM 40 can be provided by a separate bus or any other suitable form of data link. (It is also possible for the memory controller to be implemented in a single device with RAM 40).

Processor 20 sends commands over bus 70 to memory controller 35 in order to read data from or write data to RAM 40. In a multiprocessing system, the RAM may be shared between the various processors, or there may be different RAM for each processor. In addition, there may be multiple memory controllers, each coupling one or more blocks of RAM to the bus 70.

The processor 20 typically operates at a much higher speed than host bus 70 and RAM 40. Therefore, in order to avoid processing delays while data is being accessed, a cache 30 is provided. This has a smaller capacity than RAM 40, but can provide a much faster response to the processor 20. Thus in effect, cache 30 provides processor 20 with a fast, local copy of selected data from RAM 40.

Note that many systems have a cache hierarchy comprising multiple levels of cache. The hierarchy commences with a level 1 (L1) cache, normally provided on the same chip as processor 20, which is the smallest but fastest cache in the hierarchy. The next level in the hierarchy (referred to as L2) is larger, but slower, than the L1 cache. This may also be on the same chip as the processor 20 itself, or may alternatively be provided on a separate semiconductor device. In some systems, an L3 cache is also provided.

Computer system 10 also includes various other devices attached to bus 70. These include a network interface unit 45, I/O units 80, and non-volatile storage 55. The network interface unit 45 allows system 10 to send data out over and receive data from network 65 (which may for example be the Internet). It will be appreciated that any given computer system may in fact be linked to multiple networks, such as by a telephone modem, by a LAN interface unit, and so on. The various I/O units 80 typically comprise one or more keyboards, monitors, and so on. These allow users to directly interact with system 10. Non-volatile storage 35 is normally provided by one or more hard disk drives (potentially configured into an array), but may also include tape storage and/or optical storage (such as a CD-ROM, DVD, etc). Storage 55 may be dedicated to one particular computer system 10, or may be shared between multiple systems, via an appropriate connection, such as a fibre channel network.

In many systems it is possible for devices attached to the bus 70 to transfer data over the bus 70 without the involvement of processor 20. This is known as direct memory access (DMA). One typical use of DMA is to transfer data between RAM 40 and an I/O unit 80.

It will be appreciated that bus 70 usually carries a very considerable amount of traffic. Indeed, in some systems it may be that the bandwidth of bus 70 acts as a bottleneck on the overall system performance. (This is despite the provision of cache structure 20, which is generally intended to try to minimise the reliance of the processor 20 on bus 70). The capacity of the bus 70 is often particularly stretched in multiprocessor systems that maintain a single system image. In such a configuration, data modified by one processor must be made available (or at least notified) to the other processors. This generally involves copying data from one memory location to another. Typically this is implemented by the processor performing first a read operation, followed by a write operation, which implies a considerable overhead for both the processor 20 and also for bus 70.

In one prior art system, a VAX computer (originally from Digital Equipment Corporation, since acquired by Compaq, since acquired by Hewlett Packard), a specific copy instruction was provided. This can help in the above situation, since the processor now only has to implement a single operation to perform a copy (rather than a read operation followed by a separate write operation). Nevertheless, this VAX copy instruction was implemented by the processor, and so could still represent a burden on the system processing capability.

US6003112 discloses a controller that performs operations that might otherwise be performed by the execution of code in the processor, e.g. for copying memory in a computer system. The controller has a register file that is written to step by step, e.g. the type of operation is written into the register file, then the starting address of the block and then the destination address.

### Summary ofthe Invention

Therefore, in accordance with one embodiment of the present invention, there is provided a computer system including a processor, a controller, and a data communications facility interconnecting the processor and controller. The system further includes a memory that has multiple locations for storing data. The-controller is responsive to a single command received from the processor to copy data from a first memory location to a second memory location. The single command specifies the first and second memory locations.

Thus a single command is provided to perform a copy operation from one memory location to another, compared to typical prior art operations of requiring separate read and write operations to achieve such a copy. Since the command is handled by a controller, the processor is alleviated of the burden of having to manage and actually implement the command.

Note that in some embodiments, the processor instruction set may specifically include an instruction that causes it to issue the copy command. This instruction may then be made available to programs at an application and/or system level to perform copy operations. Alternatively, the copy command may be provided as a form of hardware optimisation, and only accessible at a low level within the machine.

The memory is typically coupled to the data communications facility by a memory controller (and may be integrated into the same device as the memory controller). Assuming that the first and second memory locations are coupled to the same memory controller, the copy command can be implemented purely internally to that unit, without any need for the data to travel on the data communications facility. This then maximises the bandwidth available to other users of the data communications facility.

In some systems there may be multiple memory controllers, where each memory controller couples a different portion of memory to the data communications facility. In one embodiment, when the first and second memory locations are coupled to the data communications facility by different memory controllers, the data can be transferred between the first and second locations using a peer-to-peer copy operation on the data communications facility. Typically this can be performed by a transaction analogous to DMA. Note that even although the peer-to-peer copy operation does involve a (single) transfer over the data communication facility, in contrast, a processor-mediated copy operation generally involves two data transfers (the first into the processor, the second out of the processor). Accordingly, a peer-to-peer memory copy will generally only consume half the bandwidth on the data communications facility compared to the prior art approach.

In a typical implementation, the controller is integrated into the memory controller(s). Since the memory controllers already manage most operations for the memory, it is therefore relatively easy for them to incorporate additional functionality in order to support the copy command. The data communications facility is typically implemented as a bus (although it may be a bus hierarchy, a switching fabric, or any other suitable facility). The bus supports a given command set, which can then be extended, compared to prior art systems, to include the copy command.

In one particular embodiment, the controller maintains a table or other suitable data structure (such as a queue). This contains entries for any copy operations to be performed, including information about the source and destination locations involved (i.e. the first and second memory locations, respectively). The controller can then implement the required copy operations, for example by processing each entry in the table or queue in turn.

It is generally advantageous for performance reasons for the processor to be allowed to continue with normal operations prior to completion of the copy (this avoids holding the processor up). However, in this case measures must be taken to ensure that the situation is transparent to the processor (i.e. from the perspective of the processor, the system must operate as if the copy operation had indeed been completed, even although it is actually still in progress, or waiting to be implemented). The controller must therefore be able to determine if the processor is attempting to access a memory location that is still involved in a copy, and then act accordingly.

Such a determination is made in one embodiment by comparing the address that the processor wants to access with the source and destination (target) locations of pending copy operations (such as stored in the table or queue, for example). In the event that the processor wants to read from the second (target) location, then it is redirected to the corresponding address of the first (source) location. Alternatively, if the processor wants to write to the second memory location, then this is permitted, but the copy operation to that address is now cancelled, since it has, in effect, been superseded, by the new data of the write request.

On the other hand, if the processor wants to write to the first memory location, then the controller must delay this write until the data from this address has been duly copied into the second memory location. (Note that in this latter case, the controller may perform the copy from this address as soon as possible, in order to allow the processor write operation to proceed).

In a typical implementation, the system further comprises a cache. In prior art systems, where the processor mediates a copy operation, the cache can fill with data that the processor is loading in simply to then write out again for the copy operation. It will be appreciated that the presence of this data in the cache is often of no real use to the processor (since the data will not normally be needed for operations in the immediate future), and indeed, it is potentially detrimental, since its loading may have caused the cache to spill some other more useful data. In contrast, with the present approach, the processor is not involved in performing the copy, and so the data being copied does not get entered unnecessarily into the cache.

Nevertheless, the presence of the cache does mean that care must be taken to ensure that the cache and the memory remain consistent with one another. Therefore, in one embodiment, any cache entry for the second memory location is invalidated in response to the copy command (normally by setting an appropriate bit within the cache entry). The reason for doing this is that the copy operation will write new data directly to the second memory location, without going through the cache (since the processor is not involved). Hence any cache entry for the second memory location will no longer correctly reflect the data stored in memory. Conversely, any cache entry for the first memory location may have to be written out to memory prior to performing the copy. This then ensures that the copy operation will proceed with the most recent data for this memory location. Note that these cache operations can be directed either by the processor itself, prior to sending the copy command, and/or by the controller, in response to receipt of the copy command.

In one embodiment, the controller sends an acknowledgement back to the processor in response to receipt of the (single) copy command. This then allows the processor to know that the copy command is being implemented. On the other hand, if the processor does not receive such an acknowledgement before a time-out-expires, it assumes that the copy command is not being implemented. In this case, the processor can elect to perform the copy operation itself, using the prior art approach of issuing successive read and write commands. The advantage of this facility is that it maintains backwards compatibility with components that do not support the single copy command.

In accordance with another embodiment of the invention, there is provided a method of operating a computer system that includes a processor, a controller, and a data communications facility that interconnects the processor and the controller. The computer system further includes a memory having a plurality of locations for storing data. The method comprises the steps of issuing a single command from the processor to the controller, where the command specifies a first memory location and a second memory location, and responsive to receipt of the command by the controller, copying data from a first memory location to a second memory location.

It will be appreciated that such methods can generally utilise the same particular features as described above in relation to the system embodiments.

### Brief Description of the Drawings

Various embodiments of the invention will now be described in detail by way of example only with reference to the following drawings, in which like reference numerals pertain to like elements, and in which:
Figure 1 is a diagram showing in schematic form the main components of a typical prior art computer system;
Figure 2 is a flowchart depicting steps performed in accordance with one embodiment of the present invention in order to implement a copy operation;
Figures 3A-3C illustrate the contents of memory and a memory mapping table at various stages of a copy operation, in accordance with one embodiment of the present invention; and
Figure 4 is a flowchart depicting steps performed in accordance with one embodiment of the present invention, if the processor attempts to access data that is subject to the copy operation of Figure 2;

### Detailed Description

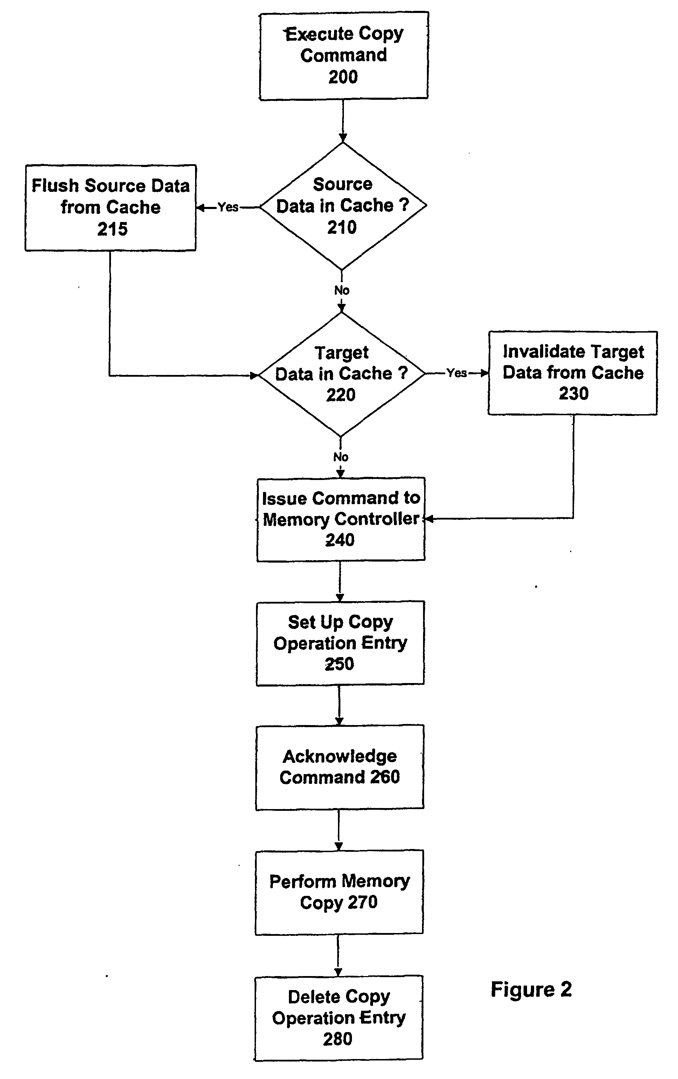

Figure 2 illustrates a method for performing a copy operation in accordance with one embodiment of the invention. This method is typically implemented in a system having an overall architecture such as shown in Figure 1 (or some variation of it).

The method of Figure 2 commences when the processor executes a command to copy one region of memory (the source location) to another region of memory (the target location) (step 200). This command can be the result of some application or operating system task, which needs to create a copy of data. One example of where such a copy operation is often performed is when the system is receiving an incoming data flow, such as over network 65. Typically, the data is received by a communications process and stored into one region of memory. The data then needs to be copied elsewhere, in order to be made available to its eventual recipient (normally an application program).

In response to the copy command, the CPU tests to see whether or not any of the source location is currently in the cache (step 210). The reason for this is that the most up-to-date version of the data for this location may be stored in the cache, without having yet been copied back to main memory (RAM). Accordingly, if any of the source data is indeed in the cache, this is flushed (written) back to RAM (step 215). This ensures that when the copy operation is performed in RAM (without involving the CPU, see below), it utilises the correct current data for that memory location.

Note that in some systems, cache data that is updated or created by the processor may be copied automatically from the cache out into RAM, thereby preserving the two in synchronism. In this case, the test of step 210 and the flushing of step 215 are generally unnecessary. In other systems, cache data that has been created or updated by the processor may be specifically marked, such as by a flag, in order to indicate that it must be written back to RAM. With this arrangement, the flushing of step 215 would then only need to be performed on data flagged in this manner (since for the remaining, unflagged, data, the cache and RAM would still be consistent with one another).

A test is also performed to see if there is any data in the target location in the cache (step 220). (Note that this can actually be done before or at the same time as the test of step 210). The reason for testing for cache data at the target location is that the copy operation is (in effect) a write to the target location. Consequently, any data in the cache for the target location will become invalid - in other words, it will no longer represent an accurate local copy of the data stored in RAM.

If a cache entry is indeed found with respect to the target location at step 220, then the relevant data is invalidated from the cache (step 230). Of course, depending on the amount of data to be copied, there may have to be more than one cache entry that is invalidated (these need not necessarily be contiguous). Typically this can just be done by setting a bit associated with the relevant cache entries in order to indicate that they are no longer valid. This then allows these entries to be replaced in the cache in due course.

Once any cache entries corresponding to the target location have been invalidated at step 230, the processor now issues a copy command over the bus to the memory controller (step 240). It will be appreciated that this command is a new command not supported by existing standard bus protocols. The command identifies the source and target locations, although the exact format will be dependent on the particular bus protocol being used. Typically, the source location can be specified by a start and end address, or by a start address and size. The target location can then be specified in a like manner (although its size can be taken as implicit, based on the size of the source region).

For example, in one embodiment the copy command has the format: Copy X Y Z, where this is a command to transfer X data words from source address Y to target address Z. (Note that the amount of data to transfer could instead be specified in bytes, or in any other suitable unit).

Note that although in the method of Figure 2, it is the processor that flushes any source data from the cache and invalidates any target data in the cache, prior to issuing a copy command to the memory controller, in another embodiment, one or both of these actions may be the responsibility of the memory controller itself (and would therefore follow on from, rather than precede, step 240). A further possibility is that the processor is responsible for interactions with certain lower levels within the cache (e.g. L1), while the memory controller is responsible for higher levels in the cache (e.g. L2 and L3).

On receipt of the copy command, the memory controller sets up an entry in a copy operation table to reflect the requested copy command (step 250). As will be discussed in more detail below, this mapping provides an indication of the copy operation to be performed.

The memory controller can now send a command acknowledgement back to the processor (step 260). This command indicates that the copy operation is in hand, and allows the processor to continue as if the desired memory copy operation has been completed. In some embodiments, this acknowledgement may not be sent until the controller really has completed the copy operation (i.e. until after step 270, see below). However, this can lead to delays at the processor, and so negatively impact overall system performance.

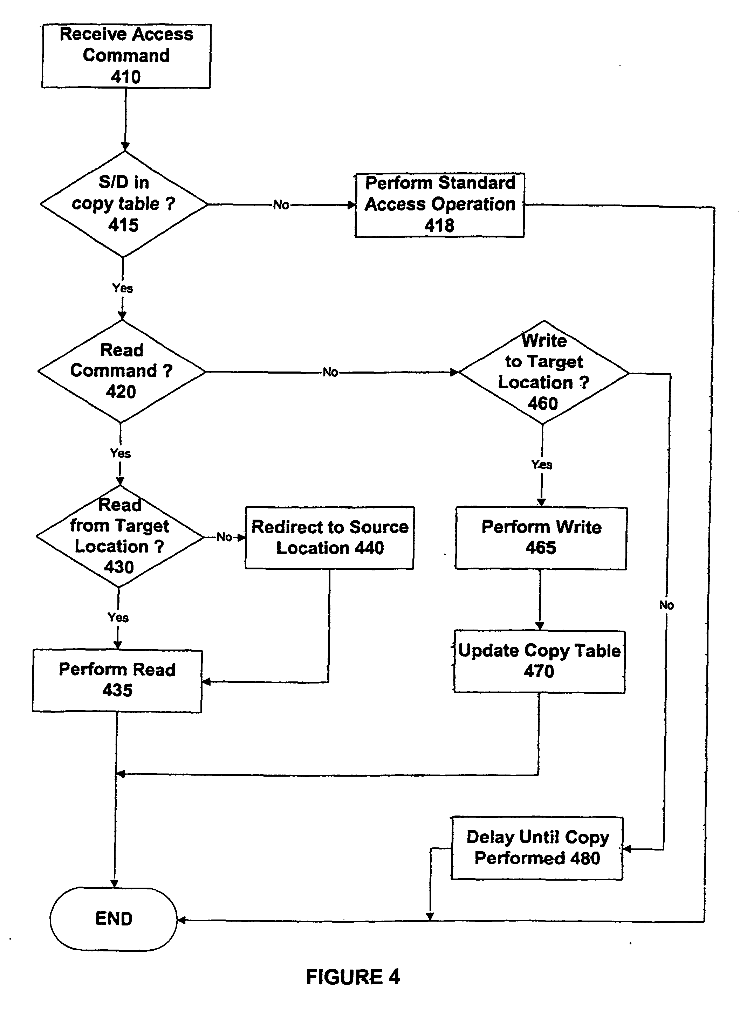

Thus it is generally better from a performance perspective to send the acknowledgement of step 260 from the memory controller back to the processor prior to completion of the copy operation itself. This then allows the processor to continue processing. However, certain precautions must now be taken to hide from the processor the fact that the copy operation is actually still ongoing, otherwise there is the possibility of unexpected or incorrect results. These precautions are discussed below in relation to Figure 4.

Note that if the processor does not receive the acknowledgement of step 260 within the relevant time-out period for the bus protocol, this is treated as an error. Accordingly, some CPU trap is triggered, and appropriate error processing can be invoked. Typically, the processor then implements the copy using the prior art approach of issuing separate read and write commands on the bus. One advantage of this strategy is that it maintains backwards compatibility. For example, if the memory controller does not support the single copy operation as described herein, then the copy will still be performed in due course by these read and write commands.

Assuming that the copy command is indeed properly received and acknowledged, the memory controller now gives effect to the copy operation (step 270). Providing that the source and destination locations are within the same RAM device (or group of devices attached to a single memory controller), then the copy operation does not consume any bandwidth at all on bus 70. Rather, the memory controller can implement the copy using an internal memory transfer. Once this transfer has been completed, the corresponding entry can be deleted from the copy operation table as no longer required (step 280), and this represents the conclusion of the copy operation.

It will be appreciated that in the method of Figure 2, the processor is not involved after issuing the copy command of step 240. This therefore allows the processor to continue performing other instructions, rather than having to utilise processor cycles for the copy operation. A further advantage of this approach is that the data being copied does not get entered into cache 30, as would have been the case if the data were being routed via the processor. As a result, the cache is not filled with data that is only transiting the processor en route from one memory location to another, and so would probably be of little future interest to the processor.

Note that in order to implement the method depicted in Figure 2 in a system such as shown in Figure 1, the bus protocol can be extended to support the new copy command (such as Copy X Y Z). In addition, the processor is configured to issue such a command where appropriate, and the memory controller is configured to receive and implement such a command.

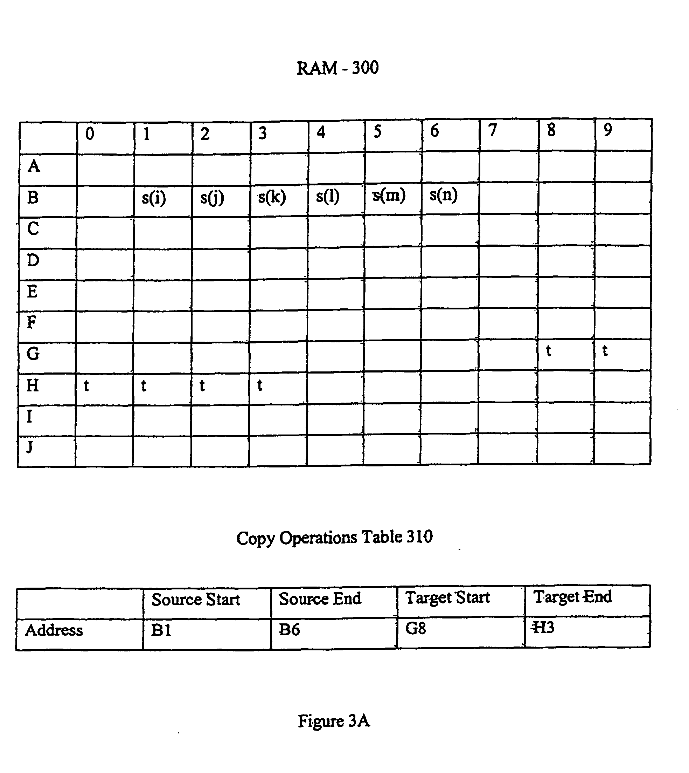

Figures 3A-3C are schematic illustrations of data structures that are used by the memory controller in one embodiment to support the copy operation. In particular, each of Figures 3A-3C depicts a RAM 300, comprising (for ease of illustration) multiple cells arranged into a grid, and a corresponding copy operation table 310, which is maintained and managed by the memory controller. (Note that the different Figures within Figures 3A-3C illustrate the RAM 300 and copy operation table 310 at various stages of a copy operation).

It is assumed in Figure 3A that the memory controller has just received a command from the processor (corresponding to step 240 of Figure 2) to copy data from a source location (B1-B6) to a target location (G8 through to H3). (For ease of reference, in the RAM of Figure 3A, the source cells for this copy operation are denoted by an "s", and their contents by the letters i-n, while the target cells are denoted by a "t"). The controller has entered the received copy instruction into the first line of copy operation table 310 (corresponding to step 250 of Figure 2). Note that copy operation table 310 may include multiple entries, each reflecting a different operation to be implemented by the processor.

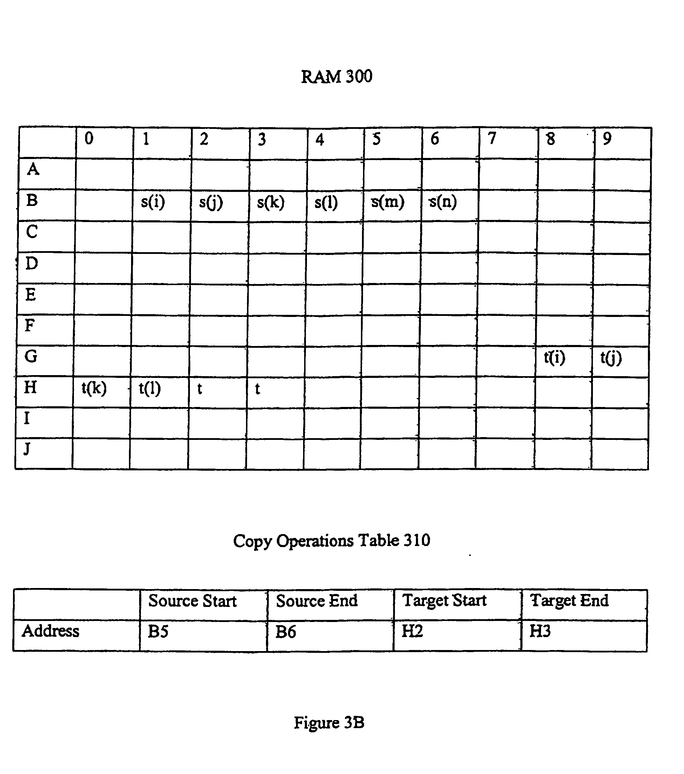

Figure 3B illustrates the situation partway through this copy operation, namely when the first four cells have been copied. At this point, the contents of the first four source cells (i-1) have now been duplicated from B1-B4 into G8-H1. The copy operation table 310 has also been updated, to reflect the fact that only two cells B5-B6 remain to be copied (into cells H2-H3). It will be appreciated that once these final two cells have been copied, the copy operation is complete, and so the entry can be removed altogether from the copy operation table 310 (corresponding to step 280 in Figure 2).

Figure 4 is a flow-chart illustrating how the memory controller handles processor requests to access source or target data during such a copy operation. (As previously discussed, such an access request may be issued by the processor at any time after it has received the acknowledgement of step 260, since it is then transparent to the processor that the copy operation is, in fact, still in progress).

The method of Figure 4 commences with the receipt of an access command from the processor (or any other relevant device) (step 410). As per a normal memory access command, this is routed to the memory controller, which then checks in the copy operation table 310 to see whether the request involves any source or target data (step 415). If not, the requested access operation can be performed directly (step 418) without concern, and the method ends.

On the other hand, if the access operation does involve source or target data, then care must be taken to ensure that there is no inconsistency (i.e. that the incomplete state of the copy operation is not exposed to the processor). To this end, the processing now bifurcates (at step 420) according to whether the access request is a Read operation, or a Write operation.

For read requests, it is determined whether the read is from the source or target location (step 430). In the former case, the read request can proceed as normal-(step 435), since this data is known to be already correctly present in memory. In the latter case, where the read is from the source location, the situation is slightly more complicated, in that this data may not yet be available (i.e. the copy operation may not yet have completed for this portion of data). Nevertheless, because it is known that target location will ultimately have the same contents as the source location, it is possible to redirect the read request from the target location to the source location (step 440). Typically this simply involves determining the offset of the read request from the start of the target location, and then applying the same offset to the start of the source location. In this way, the request receives the data that will be copied into the specified target location, irrespective of whether or not this copying has actually yet been performed.

If the incoming request is for a write, rather than a read, then it is again determined whether the request is directed to a source location or to a target location (step 460). In the former case, the write does have to be delayed until the copy has been performed (step 480), otherwise the updated data rather than the original data will be copied to the target location. Note however that various measures-can be taken to mitigate this delay. For example, priority can be given to copying the relevant data from the source location to the target location, in order to allow the write operation to proceed promptly. (This priority may be effective for copying one particular portion of a copy operation ahead of other portions, and/or for promoting one copy operation ahead of other copy operations, if there are multiple such operations queued in the copy operation table 310). Another possibility is to allow the write to proceed directly to some available piece of memory acting as a buffer, and then to queue a copy operation to be performed from the buffer into the source location, after the original data has been copied out of the source location.

On the other hand, if the write is to a target location, then it can go ahead without delay (step 465), irrespective of whether or not the relevant copy operation has been performed yet (since this is no longer of interest to external users of the data). The only precaution necessary is that if the relevant copy operation to this target location is indeed still pending, then it must be de-queued (discarded) from the copy operation table (step 470). This then ensures that the newly written data is not subsequently over-written by belated (and no longer appropriate) implementation of the copy command.

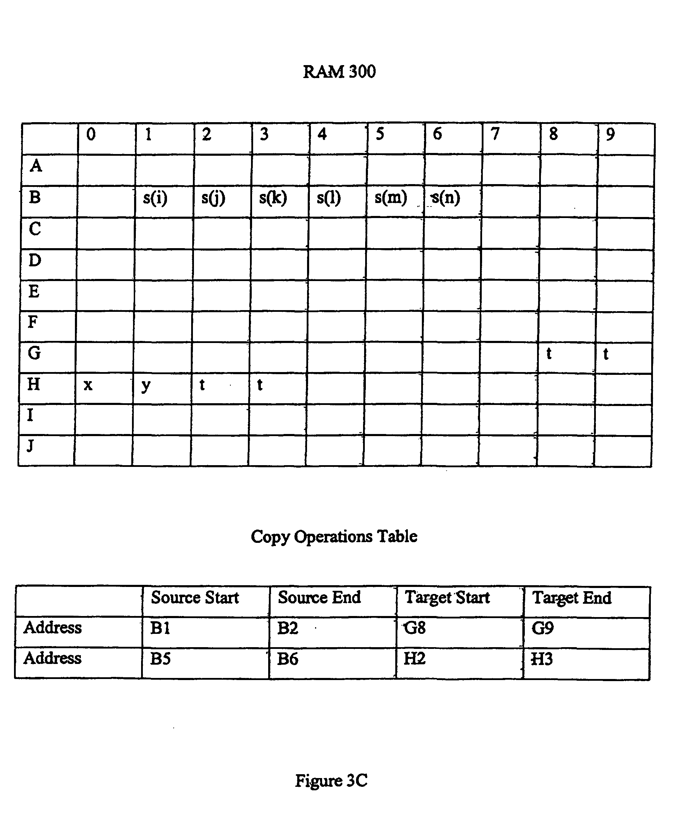

The result of this last situation, where a write request is made for a target location, is illustrated in Figure 3C. Here, it is assumed that the system starts in the state of Figure 3A, and then receives a request to write the values x and y into memory locations H0 and H1 respectively. As shown in Figure 3C, the memory locations H0 and H1 can be updated straightaway with these new values, irrespective of how far the original copy operation has proceeded. However, it is also necessary to update the copy operation table 310 in order to ensure that the new x and y data are not subsequently over-written by mistake. This is accomplished by replacing the original copy operation entry with two entries, one covering the data before H0 and H1, the other covering the data after H0 and H1.

Two possible complications to the above approach are (a) where the source and target locations overlap, and (b) where the source and target locations are handled by different controllers. In the former case, this may simply be treated as an error, and so lead to a CPU trap. This may be detected either directly by the CPU itself, without issuing the command over the bus, or as a result of no memory controller accepting (and hence acknowledging) the command. In either event, the CPU trap may implement the command by issuing successive read and write commands (as in a prior art copy operation), since this will not be impacted by the overlap in ranges.

Alternatively, the memory controller may be configured to recognise this situation and handle it appropriately. In particular, let us assume that the copy command is Copy X Y Z (as detailed above), and an overlapping range is specified, such that Y < Z < Y+X. In this situation, in order to avoid overwriting data that is still to be copied, the copy operation needs to start at the end of the source location (i.e. at address Y+X) and copy this part first (to address Z+X). The copy operation then proceeds backwards through the source location until it has all been copied to the target. (This is in contrast to starting the copy operation at the beginning of the source location, as illustrated in Figures 3A and 3B).

Regarding the situation where the source and target locations are handled by different controllers, one possible approach is to again take a CPU trap. Thus a controller may simply not respond to a copy command unless it handles both the specified source and the target locations. Therefore, if these are the responsibility of two different controllers, then neither will send an acknowledgement of the copy command back to the processor (step 260 in Figure 2). The resulting time-out at the processor will lead to appropriate error processing. Again, this typically involves a CPU trap, leading to the copy being implemented by separate read and write commands.

However, in a more sophisticated embodiment, the memory controllers are enabled to act purely as the source or target location. In this context, the functionality for implementing the copy command is, in effect, distributed across two memory controllers. For example, let us say that the source location is handled by controller A, and the target location by controller B. Controller A receives the processor copy command, and recognises that it owns the source location (but not the target location). It responds to this by (passively) setting up the copy operation, and in particular, it protects this source location against future writes until the copy is complete.

Controller B also receives the processor copy command, and recognises that it owns the target location (but not the source location). In this situation, it sends an appropriate acknowledgement back to the CPU (step 260), and initiates a peer-to-peer copy over bus 70 (rather than an internal memory copy, as previously described). Such a peer-to-peer copy can be conveniently implemented by using a bus transaction analogous to a conventional DMA transfer (the advantage of this is that it maximises compatibility with existing systems).

Although a peer-to-peer copy such as this does involve the transfer of data over the bus, this only happens once (from the source location to the target location). In contrast, if the processor mediates the copy (as in the prior art), then this consumes a bus bandwidth equal to twice the volume of the data to be copied (once for the incoming read operation to the processor, and once for the outgoing write operation from the processor). Accordingly, the peer-to-peer copy needs only half the bus bandwidth of a processor-mediated copy operation

It may be desirable to ensure that Controller A is indeed in a state to act as recipient of the peer-to-peer copy (e.g. it has performed the relevant set-up). One way to achieve this is for Controller A to only accept a peer-to-peer copy for a memory location that matches a copy command that it has already received from the processor. Another possibility is that Controller A may send some form of initial acknowledgement over the bus which can then be observed by Controller B prior to commanding the peer-to-peer copy.

A more complicated issue arises when the source or target location individually extends over two controllers. A variety of protocol mechanisms can be developed to handle this situation, for example, to split the copy operation into multiple operations, so that the source and target locations are then fully contained (on an individual basis) within a single controller. However, this is likely to add considerably to the complexity of the overall system, and it may well be more efficient simply to take a CPU trap in this situation, and then to fall back to using the processor itself to perform the copy operation via separate read/write commands.

In conclusion, although a range of embodiments have been discussed herein, it will nevertheless be appreciated that many other embodiments are possible. For example, the RAM 40 and memory controller 35 maybe implemented on the same device, while the bus 70 may be replaced by a bus hierarchy, a switching fabric, or any other suitable communications facility. In addition, the controller to manage the copy operation may be separate from the memory controller 35 - e.g. it may be provided as a special purpose component attached to the bus or other data communications facility. In this case the copy may be performed by reading data into the controller from the first memory location, and then writing out to the second memory location. (This does not reduce bus traffic compared to the prior art, but it does avoid the processor having to implement the copy itself). Alternatively, the controller may for example send a command to the memory controller(s) to perform an internal copy/transfer or peer-to-peer copy, as required. This approach may be particularly attractive if there are multiple memory controllers, since the (separate) controller may then perform some form of coordination role.

It will also be appreciated that while the system has been described in the context of a general purpose computer, such as shown in Figure 1, it can be applied to a wider range of devices, such as telecommunications apparatus, embedded systems, and so on. (Note that in this case, certain components shown in Figure 1, for example the I/O units 80 and hard storage 55, are likely to be omitted).

In summary therefore, although a variety of particular embodiments have been described in detail herein, it will be appreciated that this is by way of exemplification only. The skilled person will be aware of many further potential modifications and adaptations that fall within the scope of the claimed invention

## Claims

1. A computer system including:
a processor;
a controller;
a data communications facility interconnecting said processor and controller; and
a memory having a plurality of locations for storing data; **characterised in that** said controller is responsive to a single command received from the processor to copy data from a first memory location to a second memory location, wherein said single command specifies said first and second memory locations.

2. The system of claim 1, wherein said memory is coupled to said data communications facility via a memory controller.

3. The system of claim 2, wherein the data is copied from the first memory location to the second memory location by an internal memory transfer, without travelling over the data communications facility.

4. The system of claim 2 or 3, wherein said controller is provided by said memory controller.

5. The system of claim 1, wherein a first portion of memory is coupled to said data communications facility via a first memory controller and includes said first memory location, and a second portion of memory is coupled to said data communications facility via a second memory controller and includes said second memory location.

6. The system of claim 5, wherein the data is copied from the first memory location to the second memory location by using a peer-to-peer copy operation on the data communication facility.

7. The system of claim 6, wherein said data communications facility supports direct memory access (DMA), and said peer-to-peer copy operation is performed by using a transaction analogous to DMA.

8. The system of any of claims 5 to 7, wherein said controller is provided by said first and second memory controllers.

9. The system of any preceding claim, wherein the controller maintains a record of copy operations that are currently in progress.

10. The system of any preceding claim, wherein the processor is allowed to continue processing operations prior to completion of the copy.

11. The system of claim 10, wherein the controller redirects a read request for the second memory location to the first memory location if the copy has not yet completed.

12. The system of claim 10 or 11, wherein the controller delays a write request for the first memory location pending completion of the copy.

13. The system of any of claims 10 to 12, wherein in response to a write request for the second memory location prior to completion of the copy, the controller cancels completion of the copy for the part of the second memory location subject to the write request.

14. The system of any preceding claim, further comprising a cache, and wherein any cache entry for the second memory location is invalidated in response to said single command.

15. The system of claim 14, wherein any cache entry for the second memory location is invalidated by the processor.

16. The system of claim 14 or 15, wherein any updated cache entry for the first memory location is flushed to memory in response to said single command.

17. The system of any preceding claim, wherein said processor supports a specific programming command to copy data from a first memory location to a second memory location.

18. The system of any preceding claim, wherein said data communications facility is a bus.

19. The system of claim 18, wherein said bus supports a command set, and said single command is part of said command set.

20. The system of any preceding claim, wherein said controller transmits an acknowledgement of said single command back to the processor, and wherein the processor is responsive to a failure to receive said acknowledgement within a predetermined time-out period to perform said copy operation by issuing separate read and write commands.

21. A method for operating a computer system including a processor, a controller, a data communications facility interconnecting said processor and controller, and a memory having a plurality of locations for storing data, said method comprising the steps of:
issuing a single command from the processor to the controller, said command specifying a first memory location and a second memory location; and
responsive to receipt of said single command by the controller, copying data from a first memory location to a second memory location.

22. The method of claim 21, wherein said data communications facility is a bus that supports a command set, and said single command is part of said command set.

23. The method of claim 21 or 22, wherein the data is copied from the first memory location to the second memory location by an internal memory transfer, without travelling over the data communications facility.

24. The method of any of claims 21 to 23, wherein the processor is allowed to continue processing operations prior to completion of the copy.

25. The method of claim 24, further comprising the step of redirecting a read request for the second memory location to the first memory location if the copy has not yet completed.

26. The method of claim 24 or 25, further comprising the step of delaying a write request for the first memory location pending completion of the copy.

27. The method of any of claims 24 to 26, further comprising the step of cancelling completion of the copy for any portion of the second memory location which is subject to a write request prior to completion of the copy.

28. The method of any of claims 21 to 27, wherein the computer system further comprises a cache, and wherein said method further comprises the step of invalidating any cache entry for the second memory location in response to said single command.

29. The method of claim 28, further comprising the step of flushing any updated cache entry for the first memory location to memory in response to said single command.

## Patentansprüche

1. Computersystem, welches enthält:
einen Prozessor,
eine Steuerung (Controller),
eine Datenkommunikationseinrichtung, welche den Prozessor und die Steuerung verbindet, und
einen Speicher mit einer Mehrzahl von Positionen zum Speichern von Daten,
**dadurch gekennzeichnet, daß** die Steuerung auf einen einzigen Befehl, den sie dem Prozessor empfangt; mit dem Kopieren von Daten aus einer ersten Speicherstelle an eine zweite Speicherstelle reagiert, wobei der einzelne Befehl die ersten und zweiten Speicherstellen angibt

2. System nach Anspruch 1, wobei der Speicher mit der Datenkommunikationseinrichtung über eine Speichersteuerung verbunden ist.

3. System nach Anspruch 2, wobei die Daten durch eine interne Speicherübertragung von der ersten Speicherstelle an die zweite Speicherstelle übertragen werden, ohne daß sie über die Datenkommunikationseinrichtung laufen.

4. System nach Anspruch 2 oder 3, wobei die Steuerung durch die Speichersteuerung bereitgestellt wind.

5. System nach Anspruch 1, wobei ein erster Bereich des Speichers über eine erste Speichersteuerung mit der Datenkommunikationseinrichtung verbunden ist und die erste Speicherstelle enthält, und wobei ein zweiter Speicherbereich über eine zweite Speichersteuerung mit der Datenkommunikationseinrichtung verbunden ist und die zweite Speicherstelle enthält.

6. System nach Anspruch 5, wobei die Daten unter Verwendung eines Peer-to-Peer-Kopiervorgangs auf der Datenkommunikationseinrichtung von der ersten Speicherstelle an die zweite Speicherstelle kopiert werden.

7. System nach Anspruch 6, wobei die Datenkommunikationseinrichtung einen direkten Speicherzugriff (DMA - Direct Memory Access) unterstützt, und wobei der Peer-to-Peer-Kopiervorgang unter Verwendung einer Transaktion ausgeführt wird, die zu DMA analog ist

8. System nach einem der Ansprüche 5 bis 7, wobei die Steuerung durch die ersten und zweiten Speichersteuerungen bereitgestellt wird.

9. System nach einem der vorstehenden Ansprüche, wobei die Steuerung eine Aufzeichnung von Kopiervorgängen, die gerade ausgeführt werden, behält.

10. System nach einem der vorstehenden Ansprüche, wobei der Prozessor vor dem Abschließen des Kopierens Verarbeitungsvorgänge fortsetzen darf.

11. System nach Anspruch 10, wobei die Steuerung eine Leseanforderung auf die zweite Speicherstelle an die erste Speicherstelle umleitet, falls der Kopiervorgang noch nicht abgeschlossen ist

12. System nach Anspruch 10 oder 11, wobei die Steuerung eine Schreibanforderung für die erste Speicherstelle während eines anhängigen Kopiervorgangs verzögert, bis dieser abgeschlossen ist.

13. System nach einem der Ansprüche 10 bis 12, wobei in Reaktion auf eine Schreibanforderung auf die zweite Speicherstelle vor dem Abschluß des Kopierens die Steuerung den Abschluß des Kopierens für den Teil der zweiten Speicherstelle löscht, der Gegenstand der Schreibanforderung ist.

14. System nach einem der vorstehenden Ansprüche, welches weiterhin einen Cache aufweist, und wobei jeglicher Cacheeintrag für die zweite Speicherstelle in Reaktion auf den einzelnen Befehl ungültig gemacht wird.

15. System nach Anspruch 14, wobei jeder Cacheeintrag für die zweite Speicherstelle durch den Prozessor ungültig gemacht wird.

16. System nach Anspruch 14 oder 15, wobei jeder aktualisierte Cacheeintrag für die erste Speicherstelle in Reaktion auf den einzelnen Befehl in den Speicher "gespült" wird.

17. System nach einem der vorstehenden Ansprüche, wobei der Prozessor einen speziellen Programmierungsbefehl unterstützt, um Daten von einer ersten Speicherstelle an eine zweite Speicherstelle zu kopieren.

18. System nach einem der vorstehenden Ansprüche, wobei die Datenkommunikationseinrichtung ein Bus ist.

19. System nach Anspruch 18, wobei der Bus einen Befehlssatz unterstützt und wobei der einzelne Befehl Teil des Befehlssatzes ist.

20. System nach einem der vorstehenden Ansprüche, wobei die Steuerung eine Bestätigung eines einzelnen Befehls an den Prozessor zurücksendet, und wobei der Prozessor auf einen Fehler bzw. Ausfall beim Empfang der Bestätigung innerhalb einer vorbestimmten Auszeit-Periode reagiert, um den Kopiervorgang durch Ausgeben getrennter Lese- und Schreibbefehle auszuführen.

21. Verfahren zum Betreiben eines Computersystems, welches einen Prozessor, eine Steuerung, eine Datenkommunikationseinrichtung, welche den Prozessor und die Steuerung verbindet, und einen Speicher enthält, welcher eine Mehrzahl von Positionen bzw. Stellen zum Speichem von Daten hat, wobei das Verfahren die Schritte aufweist
Ausgeben eines einzelnen Befehls von dem Prozessor an die Steuerung, wobei der Befehl eine erste Speicherstelle und eine zweite Speicherstelle angibt, und
Kopieren von Daten von einer ersten Speicherstelle an eine zweite Speicherstelle in Reaktion auf den Empfang des einzelnen Befehls durch die Steuerung.

22. Verfahren nach Anspruch 21, wobei die Datenkommunikationseinrichtung ein Bus ist, der einen Befehlssatz unterstützt, und wobei der einzelne Befehl Teil eines Befehlssatzes ist.

23. Verfahren nach Anspruch 21 oder 22, wobei die Daten durch eine interne Speicherübertragung von der ersten Speicherstelle an die zweite Speicherstelle kopiert werden, ohne über die Datenkommunikationseinrichtung zu laufen.

24. Verfahren nach einem der Ansprüche 21 bis 23, wobei der Prozessor vor dem Abschluß des Kopierens mit Verarbeitungsvorgängen fortfahren darf.

25. Verfahren nach Anspruch 24, welches weiterhin den Schritt aufweist, daß eine Leseanforderung auf die zweite Speicherstelle an die erste Speicherstelle umgeleitet wird, wenn die Kopie noch nicht abgeschlossen ist.

26. Verfahren nach Anspruch 24 oder 25, welches weiterhin den Schritt aufweist, daß eine Schreibanforderung auf die erste Speicherstelle während eines anhängigen Kopiervorgangs bis zu dessen Abschluß verzögert wird.

27. Verfahren nach einem der Ansprüche 24 bis 26, welches weiterhin das Verfahren aufweist, daß der Abschluß der Kopie für irgendeinen Bereich der zweiten Speicherstelle gelöscht wird, die vor dem Abschluß des Kopiervorgangs Gegenstand einer Schreibanforderung ist

28. Verfahren nach einem der Ansprüche 21 bis 27, wobei das Computersystem weiterhin einen Cache aufweist, und wobei das Verfahren weiterhin den Schritt aufweist, daß jeder Cacheeintrag für die zweite Speicherstelle in Reaktion auf den einzelnen Befehl ungültig gemacht wird.

29. Verfahren nach Anspruch 28, welches weiterhin den Schritt aufweist, daß jeglicher aktualisierte Cacheeintrag für die erste Speicherstelle in Reaktion auf den einzelnen Befehl zu dem Speicher "ausgespült" (flushed to memory) wird.

## Revendications

1. Système informatique comportant :
un processeur ;
un contrôleur ;
un dispositif de communication de données interconnectant ledit processeur et ledit contrôleur ; et
une mémoire ayant une pluralité d'emplacements pour le stockage de données ;
**caractérisé en ce que** ledit contrôleur est sensible à une commande unique reçue du processeur pour copier des données d'un premier emplacement de mémoire à un second emplacement de mémoire, dans lequel ladite commande unique spécifie lesdits premier et second emplacements de mémoire.

2. Système selon la revendication 1, dans lequel ladite mémoire est reliée audit dispositif de communication de données par l'intermédiaire d'un contrôleur de mémoire.

3. Système selon la revendication 2, dans lequel les données sont copiées du premier emplacement de mémoire au second emplacement de mémoire par un transfert de mémoire interne, sans déplacement dans le dispositif de communication de données.

4. Système selon la revendication 2 ou 3, dans lequel ledit contrôleur est constitué par ledit contrôleur de mémoire.

5. Système selon la revendication 1, dans lequel une première partie de la mémoire est reliée audit dispositif de communication de données par l'intermédiaire d'un premier contrôleur de mémoire et comporte ledit premier emplacement de mémoire, et une seconde partie de la mémoire est reliée audit dispositif de communication de données par l'intermédiaire d'un second contrôleur de mémoire et comporte ledit second emplacement de mémoire.

6. Système selon la revendication 5, dans lequel les données sont copiées du premier emplacement de mémoire au second emplacement de mémoire par utilisation d'une opération de copie poste à poste sur le dispositif de communication de données.

7. Système selon la revendication 6, dans lequel ledit dispositif de communication de données prend en charge l'accès direct à la mémoire (DMA), et ladite opération de copie de poste à poste est effectuée en utilisant une transaction analogue à l'accès DMA.

8. Système selon l'une quelconque des revendications 5 à 7, dans lequel ledit contrôleur est constitué par lesdits premier et second contrôleurs de mémoire.

9. Système selon l'une quelconque des revendications précédentes, dans lequel le contrôleur maintient un enregistrement d'opérations de copie qui sont en cours de déroulement.

10. Système selon l'une quelconque des revendications précédentes, dans lequel le processeur est autorisé à poursuivre le traitement d'opérations avant la fin de la copie.

11. Système selon la revendication 10, dans lequel le contrôleur redirige une demande de lecture pour le second emplacement de mémoire vers le premier emplacement de mémoire si la copie ne s'est pas encore terminée.

12. Système selon la revendication 10 ou 11, dans lequel le contrôleur retarde une demande d'écriture pour le premier emplacement de mémoire dans l'attente de la fin de la copie.

13. Système selon l'une quelconque des revendications 10 à 12, dans lequel, en réponse à une demande d'écriture pour le second emplacement de mémoire avant la fin de la copie, le contrôleur annule la fin de la copie pour la partie du second emplacement de mémoire faisant l'objet de la demande d'écriture.

14. Système selon l'une quelconque des revendications précédentes, comprenant en outre une antémémoire, et dans lequel une entrée quelconque de l'antémémoire pour le second emplacement de mémoire est invalidée en réponse à ladite commande unique.

15. Système selon la revendication 14, dans lequel une entrée quelconque de l'antémémoire pour le second emplacement de mémoire est invalidée par le processeur.

16. Système selon la revendication 14 ou 15, dans lequel une entrée quelconque mise à jour de l'antémémoire pour le premier emplacement de mémoire est vidée en mémoire en réponse à ladite commande unique.

17. Système selon l'une quelconque des revendications précédentes, dans lequel ledit processeur prend en charge une commande de programmation spécifique pour copier des données d'un premier emplacement de mémoire vers un second emplacement de mémoire.

18. Système selon l'une quelconque des revendications précédentes, dans lequel ledit dispositif de communication de données est un bus.

19. Système selon la revendication 18, dans lequel ledit bus prend en charge un jeu de commandes, et ladite commande unique fait partie dudit jeu de commandes.

20. Système selon l'une quelconque des revendications précédentes, dans lequel ledit contrôleur renvoie un accusé de réception de ladite commande unique au processeur, et dans lequel le processeur est sensible à un défaut de réception dudit accusé de réception au cours d'une période de temps limite prédéterminée pour effectuer ladite opération de copie en émettant des commandes de lecture et d'écriture distinctes.

21. Procédé pour mettre en fonctionnement un système informatique comportant un processeur, un contrôleur, un dispositif de communication de données interconnectant ledit processeur et ledit contrôleur, et une mémoire ayant une pluralité d'emplacements pour stocker des données, ledit procédé comprenant les étapes qui consistent à :
émettre une commande unique du processeur au contrôleur, ladite commande spécifiant un premier emplacement de mémoire et un second emplacement de mémoire ; et
en réponse à la réception de ladite commande unique par le contrôleur, copier des données d'un premier emplacement de mémoire à un second emplacement de mémoire.

22. Procédé selon la revendication 21, dans lequel ledit dispositif de communication de données est un bus qui prend en charge un jeu de commandes, et ladite commande unique fait partie dudit jeu de commandes.

23. Procédé selon la revendication 21 ou 22, dans lequel les données sont copiées du premier emplacement de mémoire au second emplacement de mémoire par un transfert en mémoire interne sans passer par le dispositif de communication de données.

24. Procédé selon l'une quelconque des revendications 21 à 23, dans lequel le processeur est autorisé à poursuivre le traitement d'opérations avant la fin de la copie.

25. Procédé selon la revendication 24, comprenant en outre l'étape qui consiste à rediriger une demande de lecture pour le second emplacement de mémoire vers le premier emplacement de mémoire si la copie ne s'est pas encore terminée.

26. Procédé selon la revendication 24 ou 25, comprenant en outre l'étape qui consiste à retarder une demande d'écriture pour le premier emplacement de mémoire dans l'attente de la fin de la copie.

27. Procédé selon l'une quelconque des revendications 24 à 26, comprenant en outre l'étape qui consiste à annuler la fin de la copie pour une partie quelconque du second emplacement de mémoire qui fait l'objet d'une demande d'écriture avant la fin de la copie.

28. Procédé selon l'une quelconque des revendications 21 à 27, dans lequel le système informatique comprend en outre une antémémoire, et dans lequel ledit procédé comprend en outre l'étape qui consiste à invalider une entrée quelconque de l'antémémoire pour le second emplacement de mémoire en réponse à ladite commande unique.

29. Procédé selon la revendication 28, comprenant en outre l'étape qui consiste à vider en mémoire une entrée quelconque mise à jour de l'antémémoire pour le premier emplacement de mémoire en réponse à ladite commande unique.
